# EUROPÄISCHE PATENTANMELDUNG

(11) **EP 0 712 877 A1**
(43) Veröffentlichungstag der Anmeldung: **22.05.1996**
(21) Anmeldenummer: 95117193.3
(22) Anmeldetag: 01.11.1995
(51) Int. Cl.: C08G 18/08, C09J 175/08

(54) **Wässrige Kunststoffdispersionen, Verfahren zu deren Herstellung und deren Verwendung**

(30) Priorität: 16.11.1994 CH 3450/94
(71) Anmelder: Sika AG, vorm. Kaspar Winkler & Co., CH-8048 Zürich (CH)
(72) Erfinder: Stadelmann-Sidler, Ursula, CH-8046 Zürich (CH); Pfenninger, Ueli, CH-8804 AU (CH); Kopecky, Nina, D-71254 Ditzingen (DE)
(74) Vertreter: Blum, Rudolf Emil Ernst

(57) **Zusammenfassung**

Es werden Kunststoffdispersionen in wässrigen Medien beschrieben, in welchen der Kunststoff ein Polyurethan oder Polyurethanharnstoff ist, der pro 100 g des Polymermaterials 5-30 Aequivalente an anionischen oder kationischen Gruppen direkt an das Polymergerüst gebunden enthält. Der Kern dieses Kunststoffes ist aus einem aliphatischen Polyetherdiol aufgebaut, das die Beweglichkeit des Polymermoleküls gewährleistet, und auch die Polyisocyanatkomponente wird so ausgewählt, dass sie in den Kunststoff keine grösseren Anteile an Hartsegmenten einführt.

Die Dispersionen können zur Erzeugung einer abdichtenden Verbindung zwischen Substraten, beispielsweise unterschiedlichen Formkörpern, eingesetzt werden, wobei die dichtende Verbindung eine hohe Dehnung, einen tiefen Elastizitätsmodul und ein gutes Rückstellvermögen aufweist. Dadurch ist eine gewisse räumliche Verschiebung der miteinander dichtend verbundenen Formkörper mit möglichst geringer Kräfteübertragung von einem Formteil auf den anderen, ohne Rissbildung in der Abdichtung und ohne Rissbildung in den Formkörpern selbst möglich.

## Beschreibung

Es sind eine grosse Anzahl an Klebemitteln bekannt, die zur Herstellung einer klebenden Verbindung zwischen gleichartigen Substraten oder Substraten unterschiedlicher Konsistenz geeignet sind. Bei der Herstellung einer Verklebung zwischen zwei Oberflächen von Substraten wird das Klebemittel auf eine der beiden Oberflächen oder auf beide Oberflächen in einer dünnen Schicht aufgetragen und sobald die klebende Verbindung ihre endgültige Festigkeit erreicht hat, beispielsweise nach Abdampfung eines Lösungsmittels oder nachdem eine chemische Härtung des Klebestoffes erfolgt ist, sollen die miteinander verklebten Substratoberflächen entweder überhaupt nicht gegeneinander verschiebbar sein oder nur in einem äusserst geringen Ausmass gegeneinander verschiebbar sein. Wenn zwei Formkörper durch eine Verklebung miteinander verbunden werden, dann erwartet man, dass Kräfte, die auf den einen Formkörper ausgeübt werden, auf den angeklebten zweiten Formkörper übertragen werden, weil durch die Klebestelle eine im wesentlichen starre Verbindung der beiden Formkörper erreicht wird.

Es ist u.a. bekannt, als Klebemittel für die angegebenen Zwecke wässrige Polyurethandispersionen einzusetzen, wobei das Polymer so aufgebaut ist, dass für die Klebestelle ein relativ hoher Elastizitätsmodul erreicht wird.

Wässrige Polyurethandispersionen werden auch zur Herstellung von Beschichtungen auf unterschiedlichen Substraten eingesetzt und, falls das zu beschichtende Substrat flexibel ist, sollen die aufgebrachten Polyurethanschichten eine entsprechend hohe Elastizität aufweisen.

Die Anforderungen, die an Dichtstoffe gestellt werden, sind prinzipiell verschieden von den oben erläuterten Anforderungen, die an Klebestoffe gestellt werden. Dichtstoffe, die für Baufugen mit hoher Fugenbewegung eingesetzt werden, sind pastöse Materialien, welche in die abzudichtenden Fugen in einer Schichtdicke von mindestens 5 mm eingebracht werden. Die Fugenbreite beträgt ebenfalls mindestens 5 mm. Die miteinander dichtend verbundenen Körper sollen zueinander räumlich verschiebbar bleiben, damit bei einer Bewegung der miteinander verbundenen Bauteile Rissbildungen verhindert werden. Kräfte, die auf einen Bauteil ausgeübt werden, sollen durch den Dichtstoff absorbiert werden, so dass sie in möglichst geringem Ausmass auf den anderen Bauteil wirken. Der Dichtstoff soll also in der Lage sein, Bewegungen der Bauteile zueinander aufzunehmen und die Fuge dauerhaft gegen Feuchtigkeit abzudichten. Bauwerke sind ferner hohen Temperaturschwankungen unterworfen und deshalb ist es wesentlich, dass die Beweglichkeit der Bauteile zueinander bei Temperaturen von etwa -40°C bis etwa +80°C gewährleistet ist. Dichtstoffe für Baufugen mit hoher Fugenbewegung sollen also eine hohe Dehnung im Bereich von -40°C bis +80°C, einen tiefen Elastizitätsmodul ebenfalls im Bereich von -40°C bis +80°C und auch ein gutes Rückstellvermögen bei Temperaturen von -40°C bis +80°C aufweisen. Des weiteren sollen die Dichtstoffe die angegebenen Eigenschaften und die dauerhafte Abdichtung gegen Feuchtigkeit während Zeiträumen von mehreren Jahrzehnten beibehalten und zwar auch dann, wenn die Baufuge drastischen Witterungsbedingungen unterworfen ist.

Als Dichtstoffe für die angegebenen Anwendungen wurden bisher verschiedene nichtwässrige Systeme verwendet, in welchen die Kunststoffkomponente ein Polyurethan, ein Silanhybrid oder ein Polysulfid war. Nichtwässrige Systeme, die organische Lösungsmittel und/oder reaktive Gruppen (z.B. freie Isocyanatgruppen) enthalten, sind jedoch aus Gründen der Umweltbelastung, der Gesundheitsrisiken und allenfalls einer Entflammbarkeit unerwünscht.

Als Dichtstoffe auf Basis wässriger Dispersionen wurden bisher keine Polyurethane eingesetzt, sondern hauptsächlich solche Produkte in welchen die dispergierte Kunststoffkomponente z.B. ein Acrylhomopolymer oder -copolymer war. Aufgrund der schlechten Eigenschaften der Abdichtungen auf Acrylbasis (Sprödigkeit, geringe Dehnbarkeit und schlechtes Rückstellvermögen) konnten diese wässrigen Dispersionen bisher nur zur Herstellung von Baufugen eingesetzt werden, bei welchen eine äusserst geringe oder überhaupt keine Beweglichkeit der Fuge benötigt wurde.

### BESCHREIBUNG DES STANDES DER TECHNIK

Wässrige Polyurethandispersionen sind seit längerem bekannt und diese wässrigen Polyurethandispersionen werden insbesondere zur Herstellung von Filmen verwendet, die hohe mechanische Festigkeiten und gute Dehnungen aufweisen. Es sei in diesem Zusammenhang beispielsweise auf die Veröffentlichung von D. Dieterich in "Progress in Organic Coatings", 9, (1981), Seiten 281-340 verwiesen.

In der deutschen Offenlegungsschrift 4 019 171 werden Beschichtungsmittel für flexible Substrate beschrieben, die eine wässrige Polyurethandispersion enthalten, wobei das Polyurethan das Umsetzungsprodukt aus einer überwiegend Polyesterdiole enthaltenden Polyolmischung mit einer Isocyanatmischung und einer Komponente ist, die zur Salzbildung befähigt ist. Die Beschichtungsmittel weisen im allgemeinen Feststoffgehalte von 30-60 Gew.-% auf, und sie sind zur Beschichtung flexibler Substrate, insbesondere Leder vorgesehen, wobei Filme einer hohen Filmhärte erhalten werden.

Auch in der internationalen Veröffentlichung WO92/01817 werden wässrige Polyurethandispersionen beschrieben, die zur Grundierung von Leder geeignet sind. Die entsprechenden wässrigen Polyurethandispersionen müssen in der Polymerstruktur neben ionischen Gruppen zwingendermassen sowohl solche Gruppierungen enthalten, die von einem Polyetherpolyol mit mindestens drei Hydroxygruppen pro Molekül stammen als auch Bestandteile, die von Fetten stammen, nämlich Rizinusöl und dessen Derivate, bzw. epoxydierte Glyzeride und deren Derivate. Durch diesen Aufbau der im wässrigen Medium dispergierten Polyurethanteilchen wird gewährleistet, dass das mit der wässrigen Dispersion behandelte Leder im nassen Zustand, im trockenen Zustand und auch bei tiefen Temperaturen eine hohe Flexibilität und eine gute Reibechtheit aufweist.

In der US-Patentschrift 5,086,110 werden wässrige Polyurethandispersionen beschrieben, die erhalten werden, indem man das 1,2-Dodecandiisocyanat mit einem Gemisch aus einer Dihydroxymonocarbonsäure und einem Polyol unter solchen Bedingungen umsetzt, dass ausschliesslich die Hydroxylgruppen mit den Isocyanatgruppen reagieren. Man erhält so ein Polyurethanprepolymeres mit freien Isocyanatgruppen und 40-125 Milliäquivalenten an freien Carboxylgruppen pro 100 g des Ausgangsmaterials, und es werden zunächst die freien Carboxylgruppen zumindestens zu 50% in die Salzform übergeführt, indem man dieses Prepolymer mit einem tertiären Amin umsetzt. Anschliessend wird das Prepolymer in einer wässrigen Lösung dispergiert, die ein Diamin enthält, in welchem die Aminogruppen primäre oder sekundäre Aminogruppen sind. Durch die Reaktion der freien Isocyanatgruppen des Prepolymeren mit den Aminogruppen des Diamins erfolgt eine Kettenverlängerung. Diese wässrigen Polyurethandispersionen stellen aufgrund des hohen Anteils an Carboxylatsalzgruppen eine kolloidale Lösung dar (siehe Spalte 2, Zeilen 24 bis 27). Sie werden zur Herstellung von Filmen herangezogen, wobei der auf dem Substrat erzeugte Film zunächst bei Zimmertemperatur, dann bei 65°C und schliesslich bei 110°C hitzebehandelt wird. Die so erhaltenen Filme weisen aufgrund des speziellen Diisocyanates, das zur Herstellung des erwähnten Carbonsäuregruppen und freie Isocyanatgruppen enthaltenden Prepolymeres eingesetzt wurde (nämlich 1,2-Dodecandiisocyanat), eine hohe Zugfestigkeit, eine gute Dehnung und eine gute Abschälfestigkeit auf.

Auch in der US Patentschrift 4,203,883 werden wässrige kolloidale Dispersionen von Harnstoff-urethanpolymersalzen beschrieben, die mit Wasser unbeschränkt verdünnbar sind, und die hergestellt werden, indem ein Carboxylgruppen enthaltendes Polyurethanprepolymeres mit endständigen Isocyanatgruppen, dessen Carboxylgruppen als Salz mit einem tertiären Amin vorliegen, als Ausgangsmaterial eingesetzt wird. Die freien Isocyanatgruppen dieses Prepolymeren werden dann mit einem Polyamin umgesetzt, das im wesentlichen ein Triamin ist, wobei die Aminogruppen dieses Polyamins primäre oder sekundäre Aminogruppen darstellen. Es ist wesentlich, dass das zur Umsetzung der Isocyanatgruppen herangezogene Polyamin mindestens 2,2 Amingruppen pro Molekül aufweist, damit bei der Herstellung eine Kettenverlängerung auftritt und in der entsprechenden wässrigen Polymerdispersion Teilchen einer im wesentlichen kolloidalen Teilchengrösse gebildet werden. Im allgemeinen liegen die Teilchengrössen der im Wasser dispergierten Teilchen des Harnstoff-urethanpolymersalzes im Bereich von 1 bis 50 nm (siehe Spalte 11, Zeilen 1-6). Diese Dispersionen des Harnstoff-urethanpolymersalzes sind insbesondere zur Herstellung von Ueberzügen geeignet, die aufgrund der kolloidalen Teilchengrösse der dispergierten Polymerteilchen hohen Glanz aufweisen. Des weiteren können die entsprechenden Dispersionen auch zu dünnen Filmen, beispielsweise einer Dicke von 0,25 - 2,54 mm vergossen werden oder als Klebemittel eingesetzt werden. Nach der Auftragung der Ueberzüge erfolgt durch die Anwesenheit der Triaminkomponente eine Vernetzung, durch welche die entsprechenden Ueberzüge die geforderte Wasserunlöslichkeit erreichen.

Obwohl beim Herstellungsverfahren die Umsetzung des Urethanprepolymeren mit freien Isocyanatgruppen mit dem im wesentlichen aus Triamin bestehenden Polyamin vorzugsweise im wässrigen Medium durchgeführt wird, so wird dennoch durch die Wahl des Polyamines und der Reaktionsbedingungen verhindert, dass wesentliche Mengen der Isocyanatgruppen des Prepolymers mit dem anwesenden Wasser reagieren (siehe Spalte 10, Zeilen 1 bis 13). Durch diese Kettenverlängerung mit dem Triamin wird auch der hohe Elastizitätsmodul der mit diesen Dispersionen hergestellten Beschichtungen erzielt (siehe die Ergebnisse in den Tabellen in Spalte 15, Zeilen 30 bis 35, bzw. Spalte 16, Zeilen 5 bis 10).

In der europäischen Patentveröffentlichung 147,674 werden wässrige Einbrennlacke beschrieben, die ein Bindemittel aus den folgenden Komponenten
a) einem Carboxylatsalzgruppen, sowie blockierte Isocyanatgruppen aufweisenden Polyurethanprepolymeren und
b) einer Carboxylatsalzgruppen aufweisenden Polyhydroxylverbindung enthalten und in dem wässrigen System sind als weitere Komponente
c) Pigmente und/oder Füllstoffe enthalten.

Sowohl die Bindemittelkomponente (a) als auch die Bindemittelkomponente (b) muss einen hohen Anteil von 10 bis 180 Milliäquivalenten, vorzugsweise 20 bis 100 Milliäquivalenten pro 100 g des Feststoffes an mindestens teilweise neutralisierten Carboxylgruppen aufweisen, damit die Dispergierung der Bindemittel, bzw. Füllstoffe in dem wässrigen System gewährleistet ist.

Sowohl die Bindemittelkomponente (a) als auch die Bindemittelkomponente (b) weist Polyether und/oder Polyestersegmente auf, jedoch muss die Kombination an diesen beiden Bindemittelkomponenten so gewählt werden, dass in dem Endprodukt sowohl eingebaute Polyethersegmente als eingebaute Polyestersegmente vorhanden sind. Dadurch wird die dort angestrebte hohe Härte, gute Dehnbarkeit und gute Haftung der auf das Substrat aufgebrachten Lackschicht auch bei den hohen Gehalten an Pigment, bzw. Füllstoff erreicht, die zur Erzielung einer guten Deckkraft erforderlich sind (siehe Anspruch 1 und Seite 3, erster Abschnitt dieser Veröffentlichung).

In der deutschen Offenlegungsschrift 2 804 609 werden wässrige Lösungen oder Dispersionen von Urethanpolymeren beschrieben, die Umsetzungsprodukte aus einem Polyesterdiol mit Polyisocyanat darstellen und die ausserdem anionische Gruppierungen (von Carbonsäuren und/oder Sulfonsäure stammende Salzgruppen) enthalten. Sie wurden als kautschukartige Klebestoffe eingesetzt.

In der veröffentlichten europäischen Patentanmeldung EP 507 173 werden wässrige Polyurethandispersionen beschrieben, die vorzugsweise 10-120 Milliequivalente an chemisch gebundenen anionischen Gruppen pro 100g des Polyurethanharnstoffes enthalten. Als Isocyanatkomponente zur Herstellung dieser Polyurethane wird das 4,4'-Dicyclohexylmethandiisocyanat mit einem erhöhten Anteil am trans, trans-Isomeren verwendet und durch diese spezielle Isocyanatkomponente können aus den Dispersionen Filme und Beschichtungen mit hohen Festigkeiten erhalten werden.

In der internationalen Patentveröffentlichung WO 91/15529 und in der entsprechenden prioritätsbegründenden deutschen Patentanmeldung, die als deutsche Offenlegungsschrift 4,011,455 veröffentlicht wurde, werden wässrige Polyurethandispersionen beschrieben, die klar sind und als Haushaltsalleskleber dienen. Das Polyurethan ist das Reaktionsprodukt aus einer Polyolmischung, die ganz oder teilweise aus Polypropylenglycol besteht mit einem mehrfunktionellen Isocyanat, das ganz oder teilweise aus alpha,alpha,alpha'alpha'-Tetramethylxyloldiisocyanat besteht, sowie einer weiteren Komponente, durch welche die zur Salzbildung befähigten Gruppen in das Polymer eingeführt werden (siehe den Anspruch 1 der genannten Veröffentlichungen). Die zur Salzbildung befähigte Komponente wird bei der Herstellung des Polyurethanes vorzugsweise in einer Menge von 10-90 Mol-%, insbesondere 20-80 Mol-%, bezogen auf die Polyolmischung und einem allenfalls angewandten Kettenverlängerungsmittel eingesetzt. Durch diese hohe Anzahl an salzbildenden Gruppen ist das Polyurethan in dem wässrigen Medium gelöst (siehe Seite 15, vorletzter Absatz) und sie verleihen dem Klebstoff eine gute Haftung an unterschiedlichen Substraten. Die Emulsionen haben bei Festkörpergehalten von 34-35 % ein opak transparentes Aussehen. Die hohe Konzentration an Salzgruppen führt jedoch zu einem hohen Elastizitätsmodul, und die mit diesen Haushaltklebstoffen hergestellten Verbindungen sind relativ spröde.

Ziel der vorliegenden Erfindung war es, neue Kunststoffdispersionen in wässrigen Medien bereitzustellen, in welchen die dispergierte Kunststoffkomponente aus einem Polyurethan oder einem Polyurethanharnstoff aufgebaut ist. Diese Kunststoffdispersionen sollen zur Herstellung von wasserdichten Verbindungen zwischen Substraten geeignet sein, wobei die Verbindungsstelle eine hohe Dehnung, einen tiefen Elastizitätsmodul und ein gutes Rückstellvermögen aufweisen soll, so dass eine räumliche Verschiebung der miteinander dichtend verbundenen Substrate in kleinen Bereichen ermöglicht wird. Diese wässrigen Kunststoffdispersionen sollen einen hohen Festkörpergehalt aufweisen, und sie sollen insbesondere zur Herstellung von Baufugen einer hohen Fugenbreite einsetzbar sein, wobei durch diese Baufugen möglichst geringe Kräfte von einem Bauteil auf einen anderen Bauteil übertragen werden, und bei der Einwirkung von Kräften, die Wasserdichtigkeit der entsprechenden Abdichtung in keiner Weise beeinträchtigt werden soll.

Ueberraschenderweise zeigte es sich, dass die angestrebten Eigenschaften durch Verwendung einer dispergierten Kunststoffkomponente erreicht werden können, die das Umsetzungsprodukt aus einem aliphatischen Polyetherdiol und/oder -triol mit einem Isocyanat mit mindestens zwei Isocyanatgruppen pro Molekül und einer Verbindung darstellt, die in ihrem Molekül mindestens eine kationische oder anionische Salzgruppe und mindestens zwei isocyanat-reaktive Gruppen aufweist, wobei die Salzgruppenkonzentration in dem Polymer in einem bestimmten Bereich liegen muss.

### BESCHREIBUNG DER ERFINDUNG

Ein Gegenstand der vorliegenden Erfindung ist eine Kunststoffdispersion in wässrigen Medien, in welcher die dispergierte Kunststoffkomponente aus einem Polyurethan oder einem Polyurethanharnstoff besteht oder diesen enthält, und wobei an dieses Polymermaterial anionische oder kationische Salzgruppen gebunden sind, und diese Dispersion dadurch gekennzeichnet ist, dass das Polyurethan bzw. der Polyurethanharnstoff das Grundgerüst eines aliphatischen Polyethers aufweist und wobei pro 100 g des Polymermateriales 5-30 Milliäquivalente an anionischen oder kationischen Gruppen direkt an das Polymergerüst gebunden sind, wobei die anionischen Gruppen Gruppierungen der Formel

-COO⁻ Me⁺ und/oder -SO₃⁻ Me⁺

und die kationischen Gruppen Gruppierungen der Formel 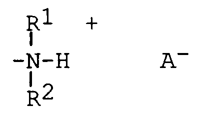
sind, in welchen
Me⁺ ein Aequivalent eines Metallkations, Ammoniumkations oder Aminkations darstellt und
R¹ und R² unabhängig voneinander aliphatische, cycloaliphatische oder aromatische Reste darstellen, oder R¹ und R² gemeinsam mit dem Stickstoffatom, an welches sie gebunden sind, eine heterocyclische Ringstruktur bilden und
A⁻ ein Aequivalent eines Anions darstellt, und wobei das Polymermaterial ein Umsetzungsprodukt ist, das aus mindestens den drei folgenden Komponenten aufgebaut ist:
a) einem Polyetherpolyol, welches ein Polymerisationsprodukt aus einem Alkylenoxid ist und eine -OH-Funktionalität von 1,5 bis 3 aufweist und frei von anionischen oder kationischen Gruppen ist und
b) einer Verbindung, die in ihrem Molekül ein oder zwei anionische oder kationische Salzgruppen der oben angegebenen Struktur, gegebenenfalls in Form der freien Carbonsäure, Sulphonsäure, bzw. des freien tertiären Amins enthält, sowie mindestens zwei isocyanat-reaktive Gruppen, die ausgewählt sind aus der Gruppe umfassend Hydroxygruppen, Aminogruppen und Mercaptogruppen, und
c) einem aliphatischen, cycloaliphatischen oder aromatischen Isocyanat mit mindestens zwei Isocyanatgruppen pro Molekül und/oder einem freie Isocyanatgruppen aufweisenden Prepolymer, wobei die Komponente c frei von anionischen oder kationischen Gruppen ist,
   und wobei in dem wässrigen Medium allenfalls Basen der Formel Me⁺OH⁻ oder Säuren der Formel A⁻H⁺ anwesend sind, die zur Ueberführung von freien Carbonsäuren, Sulphonsäuren oder tertiären Aminen in die anionischen oder kationischen Gruppen der angegebenen Struktur dienen.

In bevorzugten Umsetzungsprodukten ist die Polyetherpolyolkomponente a) ein Polyetherdiol und/oder Polyethertriol der Formel

H-[O-(CR³₂)ₙ-]ₘ-O-H

in welchem m eine ganze Zahl im Bereich von 5-150 bedeutet,
n eine ganze Zahl im Bereich von 2-5 darstellt, und die Reste R³ unabhängig voneinander Wasserstoffatome oder Alkylgruppen mit 1-4 C-Atomen darstellen, und wobei im Falle von Polyether-triolen in dem Gesamtmolekül des linearen Polyethers lediglich einer der Reste R³ die Bedeutung einer Hydroxylgruppe oder einer Polyetherseitenkette mit endständiger Hydroxylgruppe aufweist.

Durch die Polyolkomponente auf Basis des aliphatischen Polyetherdioles wird erreicht, dass die aus den erfindungsgemässen wässrigen Kunststoffdispersionen hergestellte Verbindungsstellen und Abdichtungen einen tiefen Elastizitätsmodul und eine hohe Dehnung aufweisen. Es zeigte sich, dass das Gerüst aus dem Polyetherpolyol die Beweglichkeit der Molekülstruktur bewirkt, welche für die Herstellung einer Abdichtung mit den angegebenen Eigenschaften erforderlich ist, während im Gegensatz dazu Polyurethane auf Basis von Polyesterpolyolen zu relativ starren Molekülstrukturen mit deutlich geringerer Dehnung und höherem Elastizitätsmodul führen.

Auch die Komponente (c), nämlich das Isocyanat mit mindestens zwei Isocyanatgruppen pro Molekül, bzw. ein entsprechendes freie Isocyanatgruppen aufweisendes Prepolymer, wird so ausgewählt, dass diese Komponente nicht zur Einführung von Hartsegmenten in die Polymerstruktur führt. Dabei zeigte es sich, dass solche Diisocyanate, welche leicht kristallisieren, in unerwünschter Weise in die Grundstruktur Hartsegmente einführen. Im allgemeinen kristallisieren diejenigen Isocyanate, die einen symmetrischen Aufbau besitzen, wie zum Beispiel das 4,4'-Dicyclohexylmethandiisocyanat mit einem erhöhten Anteil an trans-trans Isomeren leicht, und derartige Isocyanatkomponenten sollen daher als Komponente (c) in den erfindungsgemässen Produkten vermieden werden.

Eine weitere wesentliche Eigenschaft der Kunststoffkomponente der erfindungsgemässen Dispersionen ist die Einhaltung des Gehaltes an salzartigen Gruppen im Bereich von 5-30 Milliequivalenten an anionischen oder kationischen Gruppen pro 100 g des Polymers. Diese Salzgruppenkonzentration führt dazu, dass Dispersionen mit hohen Festkörpergehalten herstellbar sind und dass andererseits die mit diesen Dispersionen hergestellten Dichtungen eine gute Wasserbeständigkeit und Witterungsbeständigkeit besitzen. Höhere Konzentrationen an salzartigen Gruppen würden ausserdem ebenfalls zu viel zu starren Polymerprodukten führen.

Die Einhaltung der Salzgruppenkonzentration auf den angegebenen Bereich ermöglicht es jedoch, wässrige Dispersionen mit hohem Festkörpergehalt herzustellen. Ein hoher Festkörpergehalt ist wichtig, um Dichtstoffe mit geringem Schwund herstellen zu können.

Die erfindungsgemässen Kunststoffdispersionen enthalten im allgemeinen die dispergierte Kunststoffkomponente in einer Menge von 40 Gew.-% bis 70 Gew.-%, bezogen auf das Gewicht der Dispersion.

Die in dem wässrigen Medium dispergierte Kunststoffkomponente weist vorzugsweise eine mittlere Teilchengrösse im Bereich von 50 nm bis 500 nm auf, speziell bevorzugt sind mittlere Teilchengrössen, die im Bereich von 100-300 nm liegen und speziell bevorzugt im Bereich von 120-200 nm. In diesen Dispersionen sind also die Teilchen der dispergierten Kunststoffkomponente so gross, dass die wässrige Dispersion ausschliesslich dispergierte Teilchen und keine oder nur Spurenmengen besonders kleiner Teilchen einer mittleren Teilchengrösse von nur 1-30 nm enthält, die zu einer kolloidalen Lösung der Kunststoffkomponente in der wässrigen Phase führen würden. Kolloidale Lösungen sind deshalb zu vermeiden, weil mit kolloidalen Dispersionen nicht der erwünschte hohe Gewichtsanteil an der Kunststoffkomponente im Vergleich zu der wässrigen Komponente erreichbar ist.

Gemäss einer bevorzugten Ausführungsart der erfindungsgemässen Dispersionen sind die dispergierten Kunststoffpartikel aus einem Polyurethan bzw. Polyurethanharnstoff aufgebaut, der frei von reaktiven Isocyanatgruppen ist. Diese dispergierten Partikel können gegebenenfalls Vernetzungsstellen besitzen. Vernetzte Partikel sind vorzugsweise das Umsetzungsprodukt aus einem Prepolymer aus den oben angeführten Komponenten a, b und c in einem solchen stöchiometrischen Verhältnis der isocyanat-reaktiven Gruppen zu den Isocyanatgruppen, dass dieses Prepolymer noch freie unumgesetzte Isocyanatgruppen aufweist, wobei diese Isocyanatgruppen durch Umsetzung mit einem Kettenverlängerungsmittel d vernetzt sind, das aus der Gruppe ausgewählt ist, die Wasser und/oder Verbindungen umfasst, die pro Molekül zwei isocyanat-reaktive Gruppen aufweisen, welche primäre oder sekundäre Aminogruppen und/oder Hydroxylgruppen sind.

Das wässrige Medium ist in den erfindungsgemässen Dispersionen vorzugsweise Wasser, es kann allenfalls auch eine Mischung von Wasser und wasserlöslichen organischen Lösungsmitteln eingesetzt werden, beispielsweise Methanol, Ethanol, Aceton, Methyl-ethyl-keton oder N-Methylpyrrolidon.

Die erfindungsgemässen Kunststoffdispersionen enthalten die dispergierten Kunststoffpartikel, vorzugsweise in einer Menge von 40 Gew.-% bis 70 Gew.-%, insbesondere 50 Gew.-% bis 60 Gew.-%, bezogen auf das Gesamtgewicht der Dispersion.

In den erfindungsgemässen Kunststoffdispersionen können die dispergierten Teilchen der Kunststoffkomponente gegebenenfalls zusätzlich zu dem Polyurethan oder Polyurethanharnstoff mit den an das Polymergerüst gebundenen anionischen oder kationischen Gruppen noch ein weiteres Polymermaterial enthalten. Es ist ferner möglich, dass zusätzlich zu den dispergierten Polyurethan-, bzw. Polyurethanharnstoffteilchen mit anionischen oder kationischen Gruppen in dem Medium noch dispergierte Teilchen eines weiteren Kunststoffes vorhanden sind.

Die im wässrigen Medium dispergierten Kunststoffteilchen können zusätzlich einen Weichmacher enthalten, beispielsweise einen Weichmacher auf Basis von Estern von Carbonsäuren, vorzugsweise Di- oder Tricarbonsäuren, wie Phthalsäure, Adipinsäure, Sebazinsäure oder Trimellitsäure oder Estern aliphatischer oder aromatischer Sulfonsäuren und Phosphonsäureestern, wobei die veresternde Alkoholkomponente ein Arylol oder vorzugsweise ein Alkanol mit einer Alkylkette von mindestens 6 C-Atomen ist.

In den erfindungsgemässen Kunststoffdispersionen kann zusätzlich zu der dispergierten Kunststoffkomponente noch mindestens ein weiterer Bestandteil enthalten sein, der aus der Gruppe ausgewählt ist, die Pigmente, anorganische oder organische Füllstoffe, Fasern, Thixotropiermittel, Verdickungsmittel, Frostschutzmittel, Dispergierhilfsmittel, Netzmittel, fungistatische Mittel, Bakterizide, Konservierungsmittel, Entschäumer oder flammhemmende Zusätze umfasst.

Ein weiterer Gegenstand der vorliegenden Erfindung ist ein Verfahren zur Herstellung der erfindungsgemässen wässrigen Kunststoffdispersionen, das dadurch gekennzeichnet ist, dass man
a) ein Polyetherpolyol, welches ein Polymerisationsprodukt aus einem Alkylenoxid ist und eine -OH-Funktionalität von 1,5 bis 3 aufweist, und welches frei von anionischen oder kationischen Gruppen ist, und
b) eine Verbindung, die in ihrem Molekül mindestens zwei isocyanat-reaktive Gruppen enthält, die ausgewählt sind aus der Gruppe umfassend Hydroxygruppen, Aminogruppen und Mercaptogruppen, und ferner
   entweder mindestens eine in eine anionische Gruppe überführbare Carboxylgruppe oder Sulfonsäuregruppe, wobei diese Gruppe gegebenenfalls bereits vollständig oder teilweise in der Salzform der Formel

   -COO⁻ Me⁺ oder -SO₃⁻ Me⁺

   vorliegt, worin
   Me⁺ ein Aequivalent eines Metallkations, Ammoniumkations oder Aminkations darstellt, oder
   mindestens eine in eine kationische Gruppe überführbare Aminogruppe der Formel 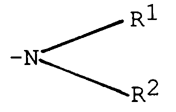 enthält, worin
   R¹ und R² unabhängig voneinander aliphatische, cycloaliphatische oder aromatische Reste darstellen, oder R¹ und R² gemeinsam mit dem Stickstoffatom, an welches sie gebunden sind, eine heterocyclische Ringstruktur bilden oder wobei diese Gruppe vollständig oder teilweise in die Salzform der Formel 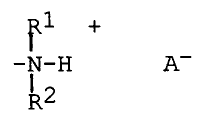 übergeführt ist, in welcher A⁻ ein Aequivalent eines Anions darstellt, vermischt und dass man
   diese Mischung aus den Komponenten a) und b) gegebenenfalls in Anwesenheit eines flüchtigen Lösungsmittels, das mit Isocyanatgruppen nicht reagiert, mit
c) einem aliphatischen, cycloaliphatischen oder aromatischem Isocyanat mit mindestens zwei Isocyanatgruppen pro Molekül und/oder einem freie Isocyanatgruppen aufweisenden Prepolymer umsetzt, wobei die Komponente (c) frei von anionischen oder kationischen salzartigen Gruppen ist und
   das Polymer in dem wässrigen Medium dispergiert, das gegebenenfalls die basische Verbindung enthält, die zur Ueberführung allfällig vorhandener Carbonsäure- oder Sulfonsäuregruppen in die anionischen Gruppierungen der angegebenen Struktur erforderlich sind oder eine saure Verbindung enthält, die zur Ueberführung der allfällig vorhandenen freien Aminogruppen in die kationische Gruppe der angegebenen Formel benötigt wird und wobei gegebenenfalls ein bei der Umsetzung der Komponenten a), b) und c) eingesetztes flüchtiges Lösungsmittel aus der Dispersion entfernt wird, vorzugsweise unter Vakuum abdestilliert wird.

Gemäss einer bevorzugten Ausführungsart des erfindungsgemässen Verfahrens erfolgt die Herstellung der erfindungsgemässen wässrigen Kunststoffdispersionen in einem zweistufigen Verfahren. In diesem Fall stellt man in einer ersten Reaktionsstufe ein Prepolymer aus den Komponenten a), b) und c) her, wobei
ein Ueberschuss an der Komponente c) eingesetzt wird, so dass ein Prepolymer aus den Komponenten a) + b) + c) entsteht, welches freie Isocyanatgruppen aufweist und diese freien Isocyanatgruppen werden in einer zweiten Reaktionsstufe mit einem Kettenverlängerungsmittel
d) vernetzt, das aus der Gruppe ausgewählt ist, die Wasser sowie Verbindungen umfasst, die pro Molekül zwei isocyanat-reaktive Gruppen aufweisen, die primäre oder sekundäre Aminogruppen und/oder Hydroxigruppen sind und
   wobei vorzugsweise diese Kettenverlängerungsreaktion durchgeführt wird, während man das Polymer in dem wässrigen Medium dispergiert, wobei dieses wässrige Medium gegebenenfalls zusätzlich noch die Verbindung enthält, die pro Molekül zwei isocyanat-reaktive Gruppen aufweist, welche primäre oder sekundäre Aminogruppen oder Hydroxigruppen sind, so dass bei der Kettenverlängerung der dispergierten Partikel eine Konkurrenzreaktion dieser Verbindung mit dem Wasser bezüglich der Umsetzung der freien Isocyanatgruppen stattfindet.

Bei der Durchführung des zweistufigen Herstellungsverfahrens wird zweckmässigerweise in einer ersten Reaktionsstufe ein Prepolymer aus den Komponenten a), b) und c) hergestellt, in welchen das stöchiometrische Verhältnis zwischen den Isocyanatgruppen der Komponente c) und den isocyanat-reaktiven Gruppen der Komponenten a) + b) so gewählt wird, dass es im Bereich von 1,2:1 bis 4:1, vorzugsweise im Bereich von 1,5:1 bis 2,5:1 liegt. Diese erste Reaktionsstufe wird zweckmässigerweise so durchgeführt, dass sämtliche in den Komponenten a) + b) enthaltenen isocyanat-reaktiven Gruppen mit den Isocyanatgruppen der Komponente c) umgesetzt werden, so dass ein Prepolymer entsteht, welches noch freie unumgesetzte Isocyanatgruppen aufweist.

Bei der Umsetzung der Komponenten a, b und c können gegebenenfalls Hilfsstoffe wie Katalysatoren oder Stabilisatoren eingesetzt werden. Des weiteren ist es möglich, bei dieser Umsetzung solche organische Lösungsmittel einzusetzen, welche keine Gruppierungen aufweisen, die zu einer Reaktion mit Isocyanatgruppen fähig sind. Typische Beispiele für entsprechende Lösungsmittel sind niedere Ketone, wie Aceton, Methylethylketon oder Methylisobutylketon. Auch cyclische Ketone, beispielsweise heterocyclische Ketone, in welchen die Heteroatome, Ethersauerstoffatome oder tertiäre Aminogruppen darstellen, die zu keiner Reaktion mit den Isocyanatgruppen fähig sind, können als Lösungsmittel anwesend sein, wie z.B. Methylpyrrolidon.

Als Katalysatoren werden bei der Umsetzung der Komponente c) mit den Komponenten a) und b) im allgemeinen solche eingesetzt, die üblicherweise zur Umsetzung von Isocyanatgruppen mit Hydroxygruppen, Thiolgruppen oder Aminogruppen verwendet werden. Typische Beispiele hierfür sind tertiäre Amine und Metallverbindungen, beispielsweise des Eisens oder des Zinns. Als Beispiel seien Dibutylzinndilaurat und Eisen-acetyl-acetonat genannt.

Bei der Umsetzung der Komponente a), b) und c) werden üblicherweise Reaktionstemperaturen angewandt, die im Bereich von 20°C bis 150°C und insbesondere im Bereich von 50°C bis 100°C liegen.

Bei der Durchführung des erfindungsgemässen Verfahrens kann die Komponente b), welche zur Einführung der anionischen Gruppierungen oder zur Einführung der kationischen Gruppierungen in das Polymermaterial dient, so eingesetzt werden, dass sie bereits die anionischen bzw. kationischen Gruppen der angegebenen Struktur enthält, oder diese Komponente b) kann die anionischen Gruppen in Form der freien Carbonsäuregruppen und/oder freien Sulfonsäuregruppen enthalten bzw. die kationischen Gruppen in Form der entsprechenden freien tertiären Aminogruppen und in diesem Fall erfolgt dann nach der Umsetzung der Komponenten a), b) und c) durch Umsetzung mit einer entsprechenden Base die Umwandlung der freien Carbonsäure bzw. Sulfonsäuregruppe in die Salzform oder durch Umsetzung mit einer Säure die Umwandlung der freien tertiären Aminogruppen in die kationischen Gruppierungen der angegebenen Struktur.

Bei der bevorzugten Durchführung des erfindungsgemässen Verfahrens wird in einer zweiten Reaktionsstufe das erhaltene Prepolymer unter starkem Rühren in Wasser oder einer wässrigen Lösung dispergiert, die gegebenenfalls die zur Ueberführung der Carbonsäuregruppen bzw. Sulfonsäuregruppen in die Salzform nötige Base oder die zur Ueberführung der freien Aminogruppen in die Salzform nötige Säure enthält und gegebenenfalls zusätzlich die Kettenverlängerungskomponente d) die pro Molekül zwei Gruppen aufweist, die primäre oder sekundäre Aminogruppen und/oder Hydroxigruppen sind.

Während des Dispergiervorganges erfolgt die Vernetzung der freien Isocyanatgruppen durch Umsetzung mit Wasser und der gegebenenfalls vorhandenen vernetzenden Verbindung, die pro Molekül zwei isocyanat-reaktive Gruppen aufweist, die primäre, bzw. sekundäre Aminogruppen und/oder Hydroxigruppen sind. In diesem Fall wird als Vernetzungsmittel bzw. Kettenverlängerungsmittel eine wässrige Lösung der Verbindungen verwendet, die pro Molekül zwei Gruppen enthält, die Hydroxyl-, primäre oder sekundäre Aminogruppen sind. In diesem Falle entsteht dann in der wässrigen Lösung eine Konkurrenzreaktion zwischen der Reaktion des Wassers mit den freien Isocyanatgruppen und der Reaktion des Hydroxylgruppen und/oder Aminogruppen aufweisenden Kettenverlängerungsmittel mit den freien Isocyanatgruppen des Prepolymers. Will man bei dieser Konkurrenzreaktion die Reaktion mit dem Hydroxyl- und/oder Aminogruppen aufweisenden Kettenverlängerungsmittel gegenüber der Reaktion des Wassers bevorzugen, dann verwendet man zweckmässigerweise Kettenverlängerungsmittel, die pro Molekül zwei primäre bzw. sekundäre Aminogruppen aufweisen, weil diese Aminogruppen mit den freien Isocyanatgruppen des Prepolymers deutlich schneller reagieren als Wasser.

Wesentlich ist, dass in dieser zweiten Reaktionsstufe sämtliche freien Isocyanatgruppen des Prepolymeres durch Umsetzung mit den erwähnten Kettenverlängerungs- bzw. Vernetzungsmitteln und/oder dem Wasser umgesetzt werden. Allenfalls kann diese Reaktion durch Erwärmen und/oder durch Zugabe von Katalysatoren beschleunigt werden.

Wenn bei der Durchführung des zweistufigen Verfahrens die anionischen Gruppen bzw. kationischen Gruppen der Komponente b) in dem Prepolymer noch nicht in die entsprechende Salzform übergeführt wurden oder nur teilweise in die Salzform übergeführt wurden, dann kann diese Ueberführung auch erfolgen, indem man in der zweiten Reaktionsstufe eine wässrige Lösung verwendet, welche gegebenenfalls das erwähnte Kettenverlängerungsmittel und zusätzlich noch eine Base enthält, beispielsweise Alkalimetall- oder Erdalkalimetallsalze oder ein tertiäres Amin, durch welches die freien Carbonsäure- bzw. Sulfonsäuregruppen in die entsprechenden anionischen Gruppen übergeführt werden, oder eine Säure, durch welche die freien tertiären Aminogruppen in die Salzform der angegebenen Struktur übergeführt werden.

Beispiele für Verbindungen, die zur Neutralisation der anionischen Gruppen eingesetzt werden können, sind Natriumhydroxid, Kaliumhydroxid, Natriumcarbonat, Kaliumcarbonat sowie tertiäre Amine wie Triethylamin, Tributylamin und ähnliche.

Die in dieser zweiten Reaktionsstufe gegebenenfalls anwesende Kettelverlängerungskomponente soll deshalb nicht mehr als zwei Gruppen pro Molekül aufweisen, die primäre, bzw. sekundäre Aminogruppen und/oder Hydoxigruppen sind, weil in dieser Stufe eine zu starke weitere Vernetzung nicht erwünscht ist. Dies könnte dazu beitragen, dass das resultierende Polymere zu hart wird und beispielsweise einen unerwünscht hohen Elastizitätsmodul aufweist.

Als Beispiele für in der zweiten Reaktionsstufe gegebenenfalls anwesende Kettenverlängerungsmittel (d), die pro Molekül zwei Isocyanatreaktive Gruppen aufweisen, welche primäre oder sekundäre Aminogruppen oder Hydroxylgruppen sind, seien die folgenden genannt: Hydrazin, Ethylenglycol, 1,4-Butandiol, Ethylendiamin, Propylendiamin, Aminoethanol und ähnliche. Versuche zeigten, dass Wasser als Kettenverlängerungsmittel bzw. Vernetzungsmittel bevorzugt ist, weil durch die Umsetzung der freien Isocyanatgruppen des Prepolymers mit dem Wasser das Entstehen solcher Polymerstrukturen begünstigt wird, die einen tiefen Elastizitätsmodul aufweisen.

Man kann das freie Isocyanatgruppen aufweisende Prepolymer in das Dispergierwasser, das allenfalls die erwähnten weiteren Komponenten enthält, einrühren oder andererseits kann man das Dispergierwasser in das Prepolymer einrühren.

Falls bei der Durchführung der ersten Reaktionsstufe ein flüchtiges organisches Lösungsmittel anwesend war, dann ist es möglich dieses Lösungsmittel während oder nach der Kettenverlängerung aus der Dispersion unter Vakuum abzudestillieren.

Falls man eine wässrige Kunststoffdispersion herstellen will, die zusätzlich zu der dispergierten Kunststoffkomponente noch mindestens einen weiteren Bestandteil enthält, dann ist es möglich diesen Bestandteil entweder dem wässrigen Dispergiermedium zuzugeben, ehe man das freie Isocyanatgruppen aufweisende Prepolymer in diesem Medium dispergiert oder erst, wenn die Kunststoffkomponente fertig vernetzt im Wasser dispergiert vorliegt. Als Beispiele für weitere Bestandteile seien Weichmacher, Pigmente, anorganische oder organische Füllstoffe, Fasern, Thixotropiermittel, Verdickungsmittel, Frostschutzmittel, Dispergierhilfsmittel, sowie stabilisierende Mittel, wie Lichtschutzmittel, UV Absorber, fungistatische Mittel, Bakterizide, Antioxydantien, Konservierungsmittel, genannt sowie ferner Entschäumer, flammhemmende Zusätze oder allenfalls weitere dispergierte Polymerkomponenten.

Bevorzugte Polyetherpolyole, die als Komponente a) bei der Herstellung der Polyurethane bzw. Polyurethanharnstoffe eingesetzt werden, sind aliphatische Polyetherdiole und/oder Polyethertriole der Formel

H-[O-(CR³₂)ₙ-]ₘ-O-H

in welchen m eine ganze Zahl im Bereich von 5-150 bedeutet,
n eine ganze Zahl im Bereich von 2-5 darstellt, und die Reste R³ unabhängig voneinander Wasserstoffatome, oder Alkylgruppen mit 1-4 C-Atomen darstellen, und wobei im Falle der Polyether-triole in dem Gesamtmolekül des linearen Polyethers lediglich einer der Reste R³ die Bedeutung einer Hydroxylgruppe oder einer Polyetherseitenkette mit endständiger Hydroxylgruppe aufweist.

Speziell bevorzugt sind dabei solche Komponenten a), in welchen höchstens einer der Reste R³ eine Hydroxigruppe oder eine Polyetherseitenkette mit endständiger Hydroxigruppe darstellt und sämtliche übrigen Reste R³ Wasserstoffatome oder Methylgruppen bedeuten. Speziell bevorzugt sind dabei solche aliphatischen Polyether-diole bzw. Polyether-triole der angegebenen Formel, in welchen in jeder der Gruppierungen der Formel

-(CR³₂)ₙ⁻

n die ganze Zahl 2 oder 3 oder 4 und insbesondere 2 bedeutet und wobei
m eine ganze Zahl im Bereich von 5-150 darstellt, die so ausgewählt wird, dass das Polyether-diol oder Polyether-triol ein mittleres Molekulargewicht im Bereich von 500-6000 Dalton (also g pro Mol) aufweist. Typische Beispiele für derartige Polyolkomponenten sind die Polyetherpolyole, die durch Polymerisation von Ethylenoxid, Propylenoxid, Butylenoxid oder Mischungen aus zwei oder mehr derartigen Komponenten erhalten werden und die ein Molekulargewicht in dem angegebenen bevorzugten Bereich aufweisen. Allenfalls können in den entsprechenden Polyetherpolyolen auch noch gewisse Anteile an aufgepfropften Strukturen und Seitenketten vorhanden sein.

Ein speziell bevorzugtes Polyetherpolyol, das zur Durchführung des erfindungsgemässen Verfahrens herangezogen wird, ist ein Polypropylenoxid-diol mit einem mittleren Molekulargewicht im Bereich von 1500-2500 Dalton, beispielsweise einem mittleren Molekulargewicht von etwa 2000 Dalton.

Versuche zeigten, dass Polymerprodukte, mit den angestrebten hohen Dehnungsmodulen und den tiefen Elastizitätsmodulen nicht erhalten werden können, wenn als Polyolkomponente a) statt des Polyetherpolyols ein Polyesterpolyol eingesetzt wird oder ein Copolymer aus Polyetherpolyol und Polyesterpolyol mit mehr als nur geringfügigsten Anteilen an Polyesterketten.

Wie bereits erwähnt wurde, müssen die zur Durchführung des erfindungsgemässen Verfahrens eingesetzten Komponenten b) in ihrem Molekül mindestens eine zur Salzbildung befähigte anionische oder kationische Gruppe und ferner mindestens zwei isocyanat-reaktive Gruppen aufweisen, die ausgewählt sind aus Hydroxygruppen, Aminogruppen und Mercaptogruppen.

Die zur Salzbildung befähigten kationischen Gruppen sind tertiäre Aminogruppen, in welchen an das Stickstoffatom aliphatische, cycloaliphatische oder aromatische Reste gebunden sind oder das tertiäre Stickstoffatom stellt einen Teil einer heterocyclischen Struktur dar, beispielsweise eine Pyridinverbindung, an deren Kern die beiden isocyanat-reaktiven Gruppierungen direkt oder über aliphatische Ketten gebunden sind.

Als Beispiele für Komponenten b), die zur Einführung der anionischen Gruppierungen der angegebenen Struktur herangezogen werden können, seien die folgenden Sulfonsäuren bzw. Carbonsäuren genannt: Dihydroxypropionsäure, Dihydroxybernsteinsäure, Dihydroxybenzoesäure, Dimethylolpropionsäure und entsprechende Säuren, in denen eine oder beide der Hydroxygruppen durch Mercaptogruppen ersetzt sind.

Wesentlich ist es, dass die Komponente b bei der Herstellung des Polyurethankunststoffes oder Polyurethanharnstoffes in einer solchen Menge eingesetzt wird, dass pro 100 g des erhaltenen Polymermaterials 5-30 Milliequivalente der anionischen oder kationischen Salzgruppen vorliegen. Vorzugsweise wird die Menge der Komponente b so eingestellt, dass pro 100 g des erhaltenen Polymers 14-18 Milliequivalent an den angeführten Salzgruppen vorhanden sind.

Bei der Entwicklung der erfindungsgemässen Kunstharzdispersionen zeigte es sich, dass Konzentrationen an den salzbildenden Gruppen, die höher liegen als 30 Milliequivalente Salz pro 100 g Polymer zu sehr kleinen dispergierten Kunststoffteilchen, eventuell sogar Teilchen einer kolloidalen Teilchengrösse in der wässrigen Dispersion führt. Falls die dispergierten Kunststoffteilchen sehr klein sind ist es schwierig Dispersionen herzustellen, die hohe Festkörpergehalte aufweisen und wie bereits erwähnt, sind hohe Festkörpergehalte bei solchen Kunststoffdispersionen bevorzugt, die als Dichtungsmittel eingesetzt werden sollen. Des weiteren wirken die Komponenten b in dem Polymer als Hartsegmente und höhere Konzentration an den angegebenen salzbildenden Gruppen als die hier erwähnten maximalen Werte führen zu unerwünscht hohen Elastizitätsmodulen der Kunststoffe. Im vorliegenden Fall sind, wie bereits erwähnt, tiefe Elastizitätsmodule der Polymerkomponente erforderlich, um ein Polymer zu erhalten, das für die vorgesehenen Verwendungszwecke optimal geeignet ist.

Durch zu hohe Konzentrationen an den salzbildenden Gruppen kann ferner die Witterungsbeständigkeit entsprechender Dichtungsmaterialien beeinträchtigt werden.

Auch die angegebene Minimalmenge an salzbildenden Gruppen im Polymer ist kritisch. Entsprechende Polymermaterialien, die weniger als 5 Milliequivalente an salzbildenden Gruppen pro 100 g des Polymers aufweisen, können zu einer Instabilität der wässrigen Dispersionen führen, und ausserdem weisen entsprechende Polymere nicht das angestrebte gute Rückstellungsvermögen bei Temperaturen im Bereich von -40°C bis +80°C auf.

Als Komponente (c) können in den erfindungsgemässen Kunststoffen beliebige aliphatische, cycloaliphatische oder aromatische Diisocyanate und/oder Polyisocyanate eingesetzt werden, wobei jedoch solche Produkte vermieden werden sollen, die in das Polymer Hartsegmente einführen, beispielsweise solche Diisocyanate oder Polyisocyanate, die aufgrund ihres symmetrischen Aufbaus zu einer Kristallisation neigen. Die als Komponente (c) verwendbaren Diisocyanate und/oder Polyisocyanate können auch sowohl Isocyanatgruppen aufweisen, die an aliphatische Reste gebunden sind, als auch solche, die an cycloaliphatische Reste gebunden sind. Ein Beispiel hierfür ist das Isophorondiisocyanat, nämlich das 3-Isocyanatmethyl-3,5,5-Trimethylcyclohexylisocyanat, bei dem eine der beiden Isocyanatgruppen direkt an den Cyclohexanrest gebunden ist, während die zweite Isocyanatgruppe über eine Methylengruppe an den Cyclohexanrest gebunden ist.

Als Beispiele seien die folgenden Isocyanate genannt:
2,4- und 2,6-Toluoldiisocyanat, 4,4'- und 2,4'-Diphenylmethandiisocyanat, Isophorondiisocyanat, 2,2,4- und 2,4,4-Trimethyl-1,6-hexamethylendiisocyanat, Hexan-1,6-diisocyanat, m- und p-Tetramethyl-xylyl-diisocyanat und die Isomeren des 4,4' oder 2,4-Dicyclohexylmethandiisocyanats sowie Polymere oder Oligomere dieser Isocyanate sowie Mischungen aus zwei oder mehr der angegebenen Isocyanatkomponenten. Falls die Diisocyanatkomponente das 4,4'-Dicyclohexylmethandiisocyanat umfasst, dann muss ein Ueberschuss an dem trans-trans-Isomeren aufgrund des symmetrischen Aufbaus und der damit verbundenen Gefahr eines Kristallisierens vermieden werden.

Gegebenenfalls können in den erfindungsgemässen Kunststoffdispersionen solche dispergierte Teilchen vorliegen, in denen zusätzlich zu dem Polyurethan oder Polyurethanharnstoff mit an das Polymergerüst gebundenen anionischen oder kationischen Gruppen noch ein weiteres Polymermaterial enthalten ist. Es ist ferner möglich, dass zusätzlich zu den dispergierten Polyurethan- oder Polyurethanharnstoff-Teilchen in der Dispersion noch dispergierte Teilchen eines weiteren Kunststoffes vorliegen.

Die in dem wässrigen Medium dispergierten Kunststoffteilchen können gegebenenfalls noch eine Weichmacherkomponente enthalten. Als Weichmacher sind auf dem Kunststoffgebiet üblicherweise eingesetzte Weichmacher verwendbar, beispielsweise Weichmacher, die üblicherweise in Polyvinylchloridpolymerisaten angewandt werden. Als Beispiele seien solche auf Basis von Estern von Carbonsäuren wie Essigsäuren oder vorzugsweise Di- oder Tricarbonsäuren, wie Phthalsäure, Adipinsäure, Sebazinsäure oder Trimellitsäure oder Estern aliphatischer oder aromatischer Sulfonsäuren und Phosphonsäureestern genannt. In diesen erwähnten Estern ist die veresternde Alkoholkomponente ein Arylol oder vorzugsweise ein Alkanol mit einer Alkylkette von mindestens 4 Kohlenstoffatomen. Typische Beispiele für verwendbare Weichmacher sind Dioctylphthalat, Diisodecylphthalat, Dioctyladipat, Benzyl-Alkylsulfonat oder Trioctylphosphat sowie ferner Polybutene.

Die Weichmacher können in Mengen von 0-200 %, bezogen auf die in der Dispersion anwesende Kunststoffkomponente eingesetzt werden.

Gegebenenfalls kann in den erfindungsgemässen Kunststoffdispersionen noch mindestens ein weiterer Bestandteil enthalten sein, der aus der Gruppe ausgewählt ist, welcher die folgenden Komponenten umfasst: Pigmente, anorganische oder organische Füllstoffe, Fasern, Thixotropiermittel, Verdickungsmittel, Frostschutzmittel, Dispergierhilfsmittel, fungistatische Mittel, Bakterizide, Konservierungsmittel, Entschäumer und flammhemmende Zusätze.

Anorganische Füllstoffe und Pigmente können zur Verbesserung der Wetterbeständigkeit der mechanischen und anderen Eigenschaften der aus den Polymerdispersionen hergestellten dichtenden Verbindungen eingesetzt werden. Als Beispiele hiefür seien genannt: verschiedene Qualitäten an Calciumcarbonaten, Kaolinen, Talken, Calciten, Bariumsulfat, Kieselgur, Glimmer, Magnesiumoxid, Silikaten, Aluminiumhydroxid, Titandioxid, Eisenoxiden, Zinksulfid sowie Mischungen aus zwei oder mehr derartigen Füllstoffen oder Pigmenten und weitere üblich verwendete Füllstoffe oder Pigmente.

Zur Modifizierung der Eigenschaften können in den erfindungsgemässen Dispersionen auch organische Füllstoffe oder Pigmente eingesetzt werden. Als Beispiele für entsprechende Produkte sei Polyvinylchlorid, Polyethylen, Polytetrafluorethylen oder Kevlar genannt, wobei die entsprechenden Produkte beispielsweise in Form von Pulvern oder als Fasern in den Dispersionen enthalten sein können. Des weiteren können in den erfindungsgemässen Dispersionen noch Russ, Graphit, Cellulosefasern oder Cellulosepulver enthalten sein. Auch organische Farbpigmente und/oder expandierte Kunststoffhohlkugeln können in den Kunststoffdispersionen, falls erwünscht, enthalten sein.

Ein weiterer Gegenstand der vorliegenden Erfindung ist die Verwendung der erfindungsgemässen Kunststoffdispersionen zur Herstellung von wasserdichten Verbindungen zwischen Substraten, beispielsweise Formkörpern aus Holz, Kunststoff, Metall, Stein, Kunststeinen wie Ziegel, Beton und Substraten mit Oberflächenbeschichtungen aus organischen Materialien, beispielsweise lackierten Substraten.

Bei der Verwendung der erfindungsgemässen Dispersionen als Dichtstoff ist es erwünscht, wenn die fertige Dispersion eine pastenförmige Konsistenz aufweist. In diesem Falle können in die Dispersion weitere Komponenten eingebracht werden, die als Verdickungsmittel wirken. Als Beispiele für Verdickungsmittel seien genannt: Kieselsäurederivate, Schichtsilikate, Celluloseether, Alginate und verwandte Zuckerderivate, Rizinusölderivate sowie Verdickungsmittel auf Polyurethan- und/oder Acrylatbasis.

Ein bevorzugtes Verwendungsgebiet der erfindungsgemässen wässrigen Kunststoffdispersionen ist der Einsatz zur Abdichtung von Fugen bzw. zur Herstellung einer abdichtenden Verbindung zwischen zwei Formkörpern, die sich voneinander in einem Abstand von mindestens 3 mm, beispielsweise einem Abstand von 5 mm oder mehr befinden. Insbesondere geeignet sind, wie bereits erwähnt, die erfindungsgemässen Dispersionen als Dichtstoffe für Baufugen mit hoher Fugenbeweglichkeit. Bei dieser Verwendung zur Abdichtung gelingt es, mit den erfindungsgemässen Dispersionen eine dichtende Verbindung herzustellen, die in einem Temperaturbereich von -40°C bis +80°C eine hohe Dehnung, einen tiefen Elastizitätsmodul und ein gutes Rückstellvermögen aufweist. Durch diese neuartigen Eigenschaften der mit den erfindungsgemässen Kunststoffdispersionen hergestellten Abdichtungen gelingt es, eine räumliche Verschiebung der miteinander dichtend verbundenen Formkörper zu gewährleisten. Insbesondere im Bausektor sind diese Eigenschaften der dichtenden Verbindung von ausschlaggebender Bedeutung, denn der Dichtstoff ist somit in der Lage, Bewegungen der Bauteile zueinander aufzunehmen, wobei nur ein Minimum an Kräften übertragen wird und somit die Bildung von Rissen in der Abdichtung und/oder in den über die Abdichtung miteinander verbundenen Bauteilen zu verhindern. Eine hohe Fugenelastizität ist auf dem Bausektor erwünscht, weil dadurch unterschiedliche thermische Ausdehnungen von Bauteilen bei starken Temperaturschwankungen und ungleichmässige Gewichtsbelastungen im Bauwerk selbst ausgeglichen werden.

Die Erfindung sei nun anhand der nachfolgenden Beispiele näher erläutert, wobei jedoch diese speziellen Ausführungsarten der Erfindungsgedanken in keiner Weise einschränken sollen.

### Beispiele:

### Beispiel 1:

627.2 GT eines Polypropylenoxid-Diols mit Molekulargewicht 2000g, z.B. Voranol PPG 2055 von Dow , 150 GT Methylethylketon, 203.5 GT Isophorondiisocyanat und 0.4 GT Dibutylzinndilaurat werden in einem Reaktionsgefäss mit Rückflusskühlung vorgelegt und gut durchgemischt. Die Mischung wird auf 80°C aufgeheizt und während einer Stunde bei 80°C gerührt.
Anschliessend werden 18.8 GT Dimethylolpropionsäure zugegeben und die Mischung weitere zwei Stunden bei 80°C gerührt. Dann wird das Prepolymer abgekühlt und abgefüllt.

560 GT dieses Prepolymers und 7.1 GT Triethylamin werden in einem Reaktionsgefäss mit Destillieraufsatz vorgelegt und innerhalb 25 Minuten auf 37°C aufgewärmt.
Unter gutem Rühren werden anschliessend 430.9 GT deionisiertes Wasser und 2 GT eines Entschäumers, z.B. Tego Foamex 3062 von Tego Chemie, zugegeben.
Nun wird ein Vakuum von 0.2 bar angelegt und die Mischung wird langsam auf 50°C aufgeheizt. Das Methylethylketon wird aus der Mischung abdestilliert und die freien NCO-Gruppen vernetzen mit Wasser. Das Vakuum und die Temperatur von 50°C werden so lange aufrechterhalten, bis ein Festkörper von 55% und ein Gehalt an freien NCO-Gruppen < 0.1 % erreicht ist.
Anschliessend wird abgekühlt und abgefüllt.
Es entsteht eine weiss-bläuliche Dispersion mit einer mittleren Teilchengrösse von 150 - 180 nm.

### Beispiel 2:

627.8 GT eines Polypropylenoxid-Diols mit Molekulargewicht 2000g, z.B. Voranol PPG 2055 von Dow, 150 GT Methylethylketon, 151.4 GT Isophorondiisocyanat, 51.5 GT Desmodur W (4,4' Dicyclohexylmethandiisocyanat) und 0.4 GT Dibutylzinndilaurat werden in einem Reaktionsgefäss mit Rückflusskühlung vorgelegt und gut durchgemischt. Die Mischung wird auf 80°C aufgeheizt und während einer Stunde bei 80°C gerührt.
Anschliessend werden 18.8 GT Dimethylolpropionsäure zugegeben und die Mischung weitere zwei Stunden bei 80°C gerührt. Dann wird das Prepolymer abgekühlt und abgefüllt.

550 GT dieses Prepolymers und 7.0 GT Triethylamin werden in einem Reaktionsgefäss mit Destillieraufsatz vorgelegt und innerhalb 25 Minuten auf 37°C aufgewärmt.
Unter gutem Rühren werden anschliessend 441 GT deionisiertes Wasser und 2 GT eines Entschäumers, z.B. Tego Foamex 3062 von Tego Chemie, zugegeben.

Nun wird ein Vakuum von 0.2 bar angelegt und die Mischung wird langsam auf 50°C aufgeheizt. Das Methylethylketon wird aus der Mischung abdestilliert und die freien NCO-Gruppen vernetzen mit Wasser. Das Vakuum und die Temperatur von 50°C
werden so lange aufrechterhalten, bis ein Festkörper von 55% und ein Gehalt an freien NCO-Gruppen < 0.1 % erreicht ist. Anschliessend wird abgekühlt und abgefüllt. Es entsteht eine weiss-bläuliche Dispersion mit einer mittleren Teilchengrösse von 150 - 180 nm.

### Vergleichsbeispiele käufliche PU-Dispersionen:

### Vergleichsbeispiel 1: Bayhydrol VP LS 2907

- Lieferant:: Bayer AG
- Aufbau:: anionisches aliphatisches Polyurethan-Polymer
- Festkörpergehalt:: 40 %
- empfohlener Einsatz:: Beschichtungen mit hoher Elastizität auf mineralischen Flächen, Metall, Holz und Kunststoff.
Zur Flexibilisierung in wasserverdünnbaren Anstrichen und Beschichtungssystemen.

### Vergleichsbeispiel 2: Alberdink U 210W

- Lieferant:: Alberdink Boley GmbH
- Aufbau:: aliphatisches Polyester-Polyurethan
- Festkörpergehalt:: 60 %
- empfohlener Einsatz:: Lederausrüstung, Textilimprägnierung und -beschichtung, Kunststoffbeschichtung, Druckfarben (Textil)

### Vergleichsbeispiel 3: Alberdink U 230W

- Lieferant:: Alberdink Boley GmbH
- Aufbau:: aliphatisches Polyester-Polyurethan
- Festkörpergehalt:: 60 %
- empfohlener Einsatz:: Lederausrüstung, Textilimprägnierung und -beschichtung, Kunststoffbeschichtung, Druckfarben (Textil)

### Vergleichsbeispiel 4: NeoRez R970

- Lieferant:: Zeneca Resins
- Aufbau:: aliphatisches Polyether-Polyurethan
- Festkörpergehalt:: 39 %
- empfohlener Einsatz:: Beschichtungen auf flexiblen Untergründen, Glasfaserbeschichtung, Abziehlacke

### Vergleichsbeispiel 5: NeoRez R963

- Lieferant:: Zeneca Resins
- Aufbau:: aliphatisches Polyester-Polyurethan mit 17% N-Methylpyrrolidon
- Festkörpergehalt:: 34 %
- empfohlener Einsatz:: Beschichtungen auf Beton, Asbest-Zement und flexiblen Kunststoffen.

### Vergleichsbeispiel 6: NeoRez R987

- Lieferant:: Zeneca Resins
- Aufbau:: aliphatisches Polyether-Polyurethan
- Festkörpergehalt:: 40 %
- empfohlener Einsatz:: Beschichtungen auf flexiblen Untergründen

### Vergleichsbeispiele käufliche Acryldispersionen:

### Vergleichsbeispiel 7: Acronal 81D

- Lieferant:: BASF
- Aufbau:: Acrylsäurecopolymer mit Acrylnitril
- Festkörpergehalt:: 60 %
- empfohlener Einsatz:: Bauklebstoffe, Haftklebstoffe und Dichtungsmassen

### Vergleichsbeispiel 8: Acronal DS 3445

- Lieferant:: BASF
- Aufbau:: Acryl-Polymer
- Festkörpergehalt:: 65 %
- empfohlener Einsatz:: Dichtstoffe

### Vergleichsbeispiel 9: Primal LC67

- Lieferant:: Rohm & Haas
- Aufbau:: Acryl-Polymer
- Festkörpergehalt:: 63 %
- empfohlener Einsatz:: plastisch-elastische Fugendichtstoffe

### Vergleichsbeispiel 10: Elastene A-10

- Lieferant:: Rohm & Haas
- Aufbau:: Acryl-Polymer
- Festkörpergehalt:: 62 %
- empfohlener Einsatz:: elastische Dichtstoffe

### Vergleichsbeispiel 11: NeoCryl XP-5022

- Lieferant:: Zeneca Resin
- Aufbau:: Acryl-Polymer
- Festkörpergehalt:: 60 %
- empfohlener Einsatz:: Dichtstoffe

### Vergleich der mechanischen Werte der Polyurethandispersionen

### Herstellung der Filme

Die Dispersionen wurden in teflonbeschichtete Kuchenbleche mit einem Durchmesser von 200 mm gegeben, sodass nach der Trocknung Filme mit einer Schichtdicke von 1.3 mm entstanden.
Die Filme wurden zwei Wochen bei Raumtemperatur und anschliessend bei 40°C bis zur Gewichtskonstanz getrocknet.

### Mechanische Werte

Nach DIN 53504 wurden an ausgestanzten Normstäben S2 die Zugfestigkeit, die Reissdehnung und die Spannung bei 100% Dehnung (E-Modul) bestimmt.
Mit der verwendeten Zugprüfmaschine können Dehnungen bis maximal 1200% gemessen werden. Bei Proben, welche eine Reissdehnung > 1200% aufweisen, wird anstelle der Zugfestigkeit die Spannung bei 1200% Dehnung angegeben.

| **Resultate:** | | | |
|---|---|---|---|
| | **Zugfestigkeit [N/mm²]** | **Reissdehnung [%]** | **Spannung bei 100% [N/mm²]** |
| Beispiel 1 | 9.0 | 1000 | 0.7 |
| Beispiel 2 | > 7.0 | > 1200 | 0.8 |
| Vergleichsbeispiel 1 | 12.5 | 500 | 2.5 |
| Vergleichsbeispiel 2 | 30.0 | 450 | 2.3 |
| Vergleichsbeispiel 3 | 21.5 | 650 | 1.5 |
| Vergleichsbeispiel 4 | 35.0 | 600 | 7.1 |
| Vergleichsbeispiel 5 | 45.0 | 450 | 12.3 |
| Vergleichsbeispiel 6 | 23.0 | 650 | 3.6 |

### Diskussion der mit den erfindungsgemässen Polymerdispersionen und den Dispersionen zu Vergleichszwecken erhaltenen Resultate:

Die aus den erfindungsgemässen Polyurethandispersionen der Beispiele 1 und 2 hergestellten Filme sind deutlich weicher und flexibler als die Filme, die aus den käuflich erhältlichen Polyurethandispersionen der Vergleichsbeispiele 1 bis 6 erhalten wurden.

Die Reissdehnungen der Filme, die aus den erfindungsgemässen Polyurethandispersionen der Beispiele 1 und 2 hergestellt wurden, liegen bei 1000 % und mehr, während die Spannungen bei 100 % Dehnung unter 1 N/mm² liegen.

Die Reissdehnungen der Filme, die aus den Polyurethandispersionen gemäss den Beispielen 1 bis 6 erhalten wurden, liegen deutlich unter 1000 % und die Spannungen bei 100 % Dehnung liegen deutlich über 1 N/mm².

Wässrige Kunststoffdispersionen, die Dichtstoffe darstellen oder als Komponente von Dichtstoffen eingesetzt werden, welche für Fugen mit hoher Fugenbewegung vorgesehen sind, müssen weich und flexibel sein. Man sieht aus den oben angegebenen Werten, dass aus diesem Grunde die gemäss Beispiel 1 und 2 hergestellten Polyurethandispersionen für die angegebenen Verwendungszwecke sehr gut geeignet sind, während die käuflich erhältlichen Polyurethandispersionen der Vergleichsbeispiele 1 bis 6 für die angegebenen Zwecke nicht geeignet sind.

### Verwendung der Beispiele und Vergleichsbeispiele als Dichtstoff

### Dichtstoffrezeptur: (Zusammensetzung in Gewichtsprozent ohne Berücksichtigung des Wassers)

- 26.00 %: Polymer (ohne Wasser) (aus den obengenannten Beispielen)
- 23.88 %: Diisodecylphtalat (Weichmacher)
- 1.00 %: Triton X-405 (Netzmittel von Rohm & Haas)
- 0.12 %: Orotan 850 (Dispergierhilfsmittel von Union Carbide)
- 4.00 %: Bayertitan RKB-2 (Titandioxid von Bayer)
- 0.50 %: Methocel K15MS (Methylcellulose von Dow, Verdickungsmittel)
- 44.50 %: Millicarb (CaCO₃ von Omya)

### Herstellung:

Alle Komponenten ohne die Dispersion wurden mittels einem geeigneten Rührwerk gut homogenisiert und die Füllstoffe gut eindispergiert.
Anschliessend wurde die entsprechende Dispersion aus den genannten Beispielen eingerührt, wobei die Menge so berechnet war, dass der Polymeranteil der Dispersion den 26.00% in der Rezeptur entspricht.
Die Mischung wurde zum Schluss am Vakuum gut entlüftet und in Kartuschen abgefüllt.

### Prüfungen:

Mit den Dichtstoffen aus den genannten Beispielen wurden Filme in einer Schichtdicke von ca. 2.5 mm hergestellt.
Die Filme wurden bei 40°C bis zur Gewichtskonstanz getrocknet.
Nach DIN 53504 wurden an ausgestanzten Normstäben S2 die Zugfestigkeit, die Reissdehnung und die Spannung bei 100% Dehnung (E-Modul) bestimmt.

| **Resultate:** | | | |
|---|---|---|---|
| **Dichtstoff, basierend auf folgenden Dispersionen:** | **Zugfestigkeit [N/mm²]** | **Reissdehnung [%]** | **Spannung bei 100% [N/mm²]** |
| Beispiel 1 | 1.8 | 950 | 0.5 |
| Beispiel 2 | 1.4 | 890 | 0.8 |

| **PU-Dispersionen:** | | | |
|---|---|---|---|
| Vergleichsbeispiel 1 | 1.2 | 180 | 1.0 |
| Vergleichsbeispiel 2 | 2.1 | 250 | 1.9 |
| Vergleichsbeispiel 3 | 2.4 | 500 | 1.6 |
| Vergleichsbeispiel 4 | 3.3 | 75 | - |
| Vergleichsbeispiel 5 | 7.2 | 130 | 7.0 |
| Vergleichsbeispiel 6 | 4.4 | 500 | 2.4 |

| **Acryldispersionen:** | | | |
|---|---|---|---|
| Vergleichsbeispiel 7 | 0.3 | 250 | 0.2 |
| Vergleichsbeispiel 8 | 0.3 | 220 | 0.2 |
| Vergleichsbeispiel 9 | 0.3 | 120 | 0.3 |
| Vergleichsbeispiel 10 | 0.8 | 140 | 0.5 |
| Vergleichsbeispiel 11 | 0.3 | 240 | 0.2 |

Die Dichtstoffe, welche unter Verwendung der erfindungsgemässen Polyurethandispersionen gemäss Beispiel 1 und 2 hergestellt wurden, wiesen hohe Dehnungen auf, die über 800 % lagen und gleichzeitig tiefe Spannungen bei 100 % Dehnung, nämlich weniger als 1 N/mm².

Diejenigen Dichtstoffe, die unter Verwendung von Acryldispersionen hergestellt wurden (siehe die Dichtstoffe der Vergleichsbeispiele 7 bis 11) wiesen zwar tiefe Elastizitätsmodule auf (Spannungen bei 100 % Dehnung, die unter 1 N/mm² lagen), die Reissdehnungen lagen jedoch bei maximal 250 % und sind dementsprechend viel schlechter als diejenigen, welche mit den Dichtstoffen unter Verwendung der Polyurethandispersionen gemäss Beispiel 1 und Beispiel 2 erhalten wurden.

Diejenigen Dichtstoffe, welche unter Verwendung der käuflich erhältlichen Polyurethandispersionen hergestellt wurden (siehe die Vergleichsbeispiele 1 bis 6) weisen sämtliche deutlich schlechtere Reissdehnungen auf (Maximalwert 500 %) als die Dichtstoffe, welche die erfindungsgemässen Polyurethandispersionen gemäss Beispiel 1 oder 2 enthalten. Die Dichtstoffe der Vergleichsbeispiele mit der besten Reissdehnung (siehe Vergleichsbeispiel 3 und Vergleichsbeispiel 6) besitzen jedoch hohe Spannungen bei 100 % Dehnung, nämlich die entsprechenden Werte der Spannung bei 100 % Dehnung betragen 1,6 N/mm² bzw. sogar 2,4 N/mm².

Der Dichtstoff des Vergleichsbeispiels 1 besitzt einen relativ tiefen Elastizitätsmodul, die Spannung bei 100 % Dehnung beträgt 1,0 N/mm². Dieser Dichtstoff weist jedoch eine völlig unbefriedigende Reissdehnung auf.

Die Dichtstoffe der Vergleichsbeispiele 2, 4 und 5 sind sowohl bezüglich des Elastizitätsmoduls als auch der Dehnung für die beabsichtigten Zwecke ungeeignet.

Aus den Resultaten der obigen Tabelle sieht man, dass die angeforderte Kombination eines tiefen Elastizitätsmoduls bei hoher Dehnung weder von den Dichtstoffen der Vergleichsbeispiele 1-6 erfüllt werden, die unter Verwendung handelsüblicher Polyurethandispersionen hergestellt wurden, noch unter Verwendung der Dichtstoffe der Vergleichsbeispiele 7-11 erreicht werden, die unter Verwendung der handelsüblichen Acryldispersionen hergestellt wurden. Die Dichtstoffe, welche unter Verwendung der erfindungsgemässen Dispersionen erhalten wurden, die gemäss Beispiel 1 und 2 hergestellt wurden, erfüllen jedoch die gestellten Anforderungen.

## Patentansprüche

1. Kunststoffdispersion in wässrigen Medien, in welchen die dispergierte Kunststoffkomponente aus einem Polyurethan oder einem Polyurethanharnstoff besteht oder diesen enthält, und wobei an dieses Polymermaterial anionische oder kationische Salzgruppen gebunden sind, dadurch gekennzeichnet, dass in dieser Dispersion das Polyurethan bzw. der Polyurethanharnstoff das Grundgerüst eines aliphatischen Polyethers aufweist und wobei pro 100 g des Polymermateriales 5-30 Milliäquivalente an anionischen oder kationischen Salzgruppen direkt an das Polymergerüst gebunden sind, wobei die anionischen Gruppen Gruppierungen der Formel
-COO⁻ Me⁺ und/oder -SO₃⁻ Me⁺
und die kationischen Gruppen Gruppierungen der Formel 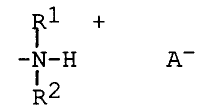 sind, in welchen
Me⁺ ein Aequivalent eines Metallkations, Ammoniumkations oder Aminkations darstellt und
R¹ und R² unabhängig voneinander aliphatische, cycloaliphatische oder aromatische Reste darstellen, oder R¹ und R² gemeinsam mit dem Stickstoffatom, an welches sie gebunden sind, eine heterocyclische Ringstruktur bilden und
A⁻ ein Aequivalent eines Anions darstellt, und wobei das Polymermaterial ein Umsetzungsprodukt ist, das aus mindestens den drei folgenden Komponenten aufgebaut ist:
a) einem Polyetherpolyol, welches ein Polymerisationsprodukt aus einem Alkylenoxid ist und eine -OH-Funktionalität von 1,5 bis 3 aufweist und frei von anionischen und kationischen Gruppen ist und
b) einer Verbindung, die in ihrem Molekül ein oder zwei anionische oder kationische Salzgruppen der oben angegebenen Struktur, gegebenenfalls in Form der freien Carbonsäure, Sulphonsäure, bzw. des freien tertiären Amins enthält, sowie mindestens zwei isocyanatreaktive Gruppen, die ausgewählt sind aus der Gruppe umfassend Hydroxygruppen, Aminogruppen und Mercaptogruppen, und
c) einem aliphatischen, cycloaliphatischen oder aromatischen Isocyanat mit mindestens zwei Isocyanatgruppen pro Molekül und/oder einem freie Isocyanatgruppen aufweisenden Prepolymeren, wobei die Komponente c frei von anionischen oder kationischen Gruppen ist,
und wobei in dem wässrigen Medium allenfalls Basen der Formel Me⁺OH⁻ oder Säuren der Formal A⁻H⁺ anwesend sind, die zur Ueberführung von freien Carbonsäuren, Sulphonsäuren oder tertiären Aminen in die anionischen oder kationischen Gruppen der angegebenen Struktur dienen.

2. Kunststoffdispersion gemäss Anspruch 1, dadurch gekennzeichnet, dass die Komponente a) des Umsetzungsproduktes ein Polyetherdiol und/ oder Polyethertriol der Formel
H-[O-(CR³₂)ₙ-]ₘ-O-H
ist, in welchem m eine ganze Zahl im Bereich von 5-150 bedeutet,
n eine ganze Zahl im Bereich von 2-5 darstellt, und die Reste R³ unabhängig voneinander Wasserstoffatome, oder Alkylgruppen mit 1-4 C-Atomen darstellen, und wobei im Falle von Polyether-triolen in dem Gesamtmolekül des linearen Polyethers lediglich einer der Reste R³ die Bedeutung einer Hydroxylgruppe oder einer Polyetherseitenkette mit endständiger Hydroxylgruppe aufweist.

3. Kunststoffdispersion gemäss Anspruch 1 oder 2, dadurch gekennzeichnet, dass die dispergierten Kunststoffpartikel aus einem Polyurethan bzw. Polyurethanharnstoff aufgebaut sind, der frei von reaktiven Isocyanatgruppen ist, wobei diese dispergierten Partikel gegebenenfalls Vernetzungsstellen besitzen und vorzugsweise das Umsetzungsprodukt aus einem Prepolymer aus den Komponenten a), b) und c) in einem solchen Verhältnis der isocyanat-reaktiven Gruppen zu den Isocyanatgruppen darstellen, dass dieses Prepolymer noch freie und unumgesetzte Isocyanatgruppen aufweist, wobei diese Isocyanatgruppen mit einem Kettenverlängerungsmittel d) vernetzt sind, das aus der Gruppe ausgewählt ist, die Wasser und/oder Verbindungen umfasst, die pro Molekül zwei isocyanat-reaktive Gruppen aufweisen, welche primäre oder sekundäre Aminogruppen und/oder Hydroxylgruppen sind.

4. Kunststoffdispersion gemäss einem der Ansprüche 1 bis 3, dadurch gekennzeichnet, dass das wässrige Medium der Dispersion aus Wasser oder einer Mischung von Wasser mit einem wasserlöslichen organischen Lösungsmittel, insbesondere Methanol, Ethanol, Aceton, Methylethylketon oder N-Methyl-pyrrolidon aufgebaut ist.

5. Kunststoffdispersion gemäss einem der Ansprüche 1-4, dadurch gekennzeichnet, dass die in dem wässrigen Medium dispergierten Teilchen der Kunststoffkomponente eine mittlere Teilchengrösse im Bereich von 50 nm bis 500 nm, vorzugsweise 100-300 nm aufweisen.

6. Kunststoffdispersion gemäss einem der Ansprüche 1 bis 5, dadurch gekennzeichnet, dass sie dispergierte Kunststoffpartikel in einer Menge von 40 Gew.-% bis 70 Gew.-%, bezogen auf das Gesamtgewicht der Dispersion enthält.

7. Kunststoffdispersion gemäss einem der Ansprüche 1-6, dadurch gekennzeichnet, dass die dispergierten Teilchen der Kunststoffkomponente zusätzlich zu dem Polyurethan oder Polyurethanharnstoff mit an das Polymergerüst gebundenen anionischen oder kationischen Gruppen noch ein weiteres Polymermaterial enthalten, oder dass zusätzlich zu den dispergierten Polyurethan bzw. Polyurethanharnstoff-Teilchen mit anionischen oder kationischen Gruppen in dem wässrigen Medium noch dispergierte Teilchen eines weiteren Kunststoffes vorhanden sind.

8. Kunststoffdispersion gemäss einem der Ansprüche 1-7, dadurch gekennzeichnet, dass die im wässrigen Medium dispergierten Kunststoffteilchen zusätzlich einen Weichmacher enthalten, beispielsweise auf Basis von Estern von Carbonsäuren, vorzugsweise Di- oder Tricarbonsäuren, wie Phthalsäure, Adipinsäure, Sebazinsäure oder Trimellitsäure oder Estern aliphatischer oder aromatischer Sulfonsäuren und Phosphonsäureestern, wobei die veresternde Alkoholkomponente ein Arylol oder vorzugsweise ein Alkanol mit einer Alkylkette von mindestens 6 C-Atomen ist.

9. Kunststoffdispersion gemäss einem der Ansprüche 1 bis 8, dadurch gekennzeichnet, dass zusätzlich zu der dispergierten Kunststoffkomponente in der Dispersion noch mindestens ein weiterer Bestandteil enthalten ist, der aus der Gruppe ausgewählt ist, die Pigmente, anorganische oder organische Füllstoffe, Fasern, Thixotropiermittel, Verdickungsmittel, Frostschutzmittel, Dispergierhilfsmittel, Benetzungsmittel, fungistatische Mittel, Bakterizide, Konservierungsmittel, Entschäumer oder flammhemmende Zusätze umfasst.

10. Verfahren zur Herstellung von Kunststoffdispersionen in wässrigen Medien gemäss einem der Ansprüche 1 bis 9, dadurch gekennzeichnet, dass man
a) ein aliphatisches Polyetherpolyol, welches ein Polymerisationsprodukt aus einem Alkylenoxid ist und eine -OH-Funktionalität von 1,5 bis 3 aufweist, und welches frei von anionischen oder kationischen Gruppen ist, und
b) eine Verbindung, die in ihrem Molekül mindestens zwei isocyanat-reaktive Gruppen enthält, die ausgewählt sind aus der Gruppe umfassend Hydroxygruppen, Aminogruppen und Mercaptogruppen, und ferner
entweder mindestens eine in eine anionische Gruppe überführbare Carboxylgruppe oder Sulfonsäuregruppe, wobei diese Gruppe gegebenenfalls bereits in der Salzform der Formel
-COO⁻ Me⁺ oder -SO₃⁻ Me⁺
vorliegt, worin
Me⁺ ein Aequivalent eines Metallkations, Ammoniumkations oder Aminkations darstellt, oder
mindestens eine in eine kationische Gruppe überführbare Aminogruppe der Formel 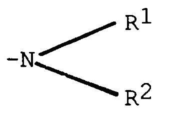 enthält, worin
R¹ und R² unabhängig voneinander aliphatische, cycloaliphatische oder aromatische Reste darstellen, oder R¹ und R² gemeinsam mit dem Stickstoffatom, an welches sie gebunden sind, eine heterocyclische Ringstruktur bilden oder wobei diese Gruppe zumindestens teilweise in die Salzform der Formel 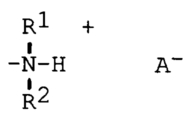 übergeführt ist, in welcher A⁻ ein Aequivalent eines Anions darstellt und dass man
diese Mischung aus den Komponenten a und b gegebenenfalls in Anwesenheit eines flüchtigen Lösungsmittels, das mit Isocyanatgruppen nicht reagiert, mit
c) einem aliphatischen, cycloaliphatischen oder aromatischem Isocyanat mit mindestens zwei Isocyanatgruppen pro Molekül und/oder einem freie Isocyanatgruppen aufweisenden Prepolymer umsetzt, wobei die Komponente (c) frei von anionischen oder kationischen salzartigen Gruppen ist, und
das Polymer in dem wässrigen Medium dispergiert, das gegebenenfalls die basische Verbindung enthält, die zur Ueberführung allfällig vorhandener Carbonsäure- oder Sulfonsäuregruppen in die anionischen Gruppierungen der angegebenen Struktur erforderlich sind oder eine saure Verbindung enthält, die zur Ueberführung der allfällig vorhandenen freien Aminogruppen in die kationische Gruppe der angegebenen Formel benötigt wird und wobei gegebenenfalls ein bei der Umsetzung der Komponenten a), b) und c) eingesetztes flüchtiges Lösungsmittel aus der Dispersion entfernt wird, vorzugsweise unter Vakuum abdestilliert wird.

11. Verfahren nach Anspruch 10, dadurch gekennzeichnet, dass man in einer ersten Reaktionsstufe ein Prepolymer aus den Komponenten a), b) und c) herstellt, wobei
ein Ueberschuss an der Komponente c) eingesetzt wird, so dass ein Prepolymer aus den Komponenten a) + b) + c) entsteht, welches freie Isocyanatgruppen aufweist und diese freien Isocyanatgruppen in einer zweiten Reaktionsstufe mit einem Kettenverlängerungsmittel
d) vernetzt, das aus der Gruppe ausgewählt ist, die Wasser sowie Verbindungen umfasst, die pro Molekül zwei isocyanat-reaktive Gruppen aufweisen, die primäre oder sekundäre Aminogruppen und/oder Hydroxigruppen sind und
wobei vorzugsweise diese Kettenverlängerungsreaktion durchgeführt wird, während man das Polymer in dem wässrigen Medium dispergiert, wobei dieses wässrige Medium gegebenenfalls zusätzlich noch die Verbindung enthält, die pro Molekül zwei isocyanat-reaktive Gruppen aufweist, welche primäre oder sekundäre Aminogruppen und/oder Hydroxigruppen sind, so dass bei der Kettenverlängerung der dispergierten Partikel eine Konkurrenzreaktion dieser Verbindung mit dem Wasser bezüglich der Umsetzung der freien Isocyanatgruppen stattfindet.

12. Verfahren nach Anspruch 11, dadurch gekennzeichnet, dass man in der ersten Reaktionsstufe ein solches Prepolymer aus den Komponenten a), b) und c) herstellt, in welchem das stöchiometrische Verhältnis zwischen den Isocyanatgruppen der Komponente c) und den isocyanat-reaktiven Gruppen der Komponenten a) + b) im Bereich von 1,2 : 1 bis 4 : 1, vorzugsweise im Bereich von 1,5 : 1 bis 2,5 : 1 liegt und dass man
in einer zweiten Reaktionsstufe dieses Prepolymer unter starkem Rühren in Wasser oder einer wässrigen Lösung dispergiert, die gegebenenfalls die zur Ueberführung der Carbonsäuregruppen bzw. Sulfonsäuregruppen in die Salzform nötige Base oder die zur Ueberführung der freien Aminogruppen in die Salzform nötige Säure enthält und gegebenenfalls zusätzlich die Kettenverlängerungskomponente d die pro Molekül zwei Gruppen aufweist, die primäre oder sekundäre Aminogruppen und/oder Hydroxygruppen sind.

13. Verfahren nach einem der Ansprüche 10 bis 12, dadurch gekennzeichnet, dass man als Komponente
a) ein Polyether-diol und/oder Polyethertriol der Formel
H-[O-(CR³₂)ₙ-]ₘ-O-H
verwendet, in welchem m eine ganze Zahl im Bereich von 5-150 ist,
n eine ganze Zahl im Bereich von 2-5 darstellt, und die Reste
R³ unabhängig voneinander Wasserstoffatome oder Alkylgruppen mit 1-4 C-Atomen darstellen, und wobei im Falle von Polyether-triolen in dem Gesamtmolekül des linearen Polyethers lediglich einer der Reste R³ die Bedeutung einer Hydroxylgruppe oder eine Polyetherseitenkette mit endständiger Hydroxylgruppe aufweist.

14. Verfahren nach Anspruch 13, dadurch gekennzeichnet, dass man als Komponente a) ein Polyetherdiol und/oder Polyether-triol der angegebenen Formel verwendet, wobei in diesem Polyetherpolyol höchstens einer der Reste R³ pro Molekül die Bedeutung einer Hydroxylgruppe oder einer über eine Polyetherkette gebundenen endständigen Hydroxylgruppe aufweist und sämtliche übrigen Reste R³ Wasserstoffatome oder Methylgruppen bedeuten und in jeder der Gruppierungen der Formel
-(CR³₂)ₙ
n die ganze Zahl 2 oder 3 oder 4 bedeutet und wobei
m eine ganze Zahl im Bereich von 5-150 darstellt, die so ausgewählt wird, dass das Polyether-diol oder Polyether-triol ein mittleres Molekulargewicht im Bereich von 500-6000 Dalton aufweist, wobei ein bevorzugtes aliphatisches Polyetherdiol ein Polypropylenoxyd-diol mit einem mittleren Molekulargewicht von 1500-2500 Dalton darstellt.

15. Verfahren gemäss einem der Ansprüche 10 bis 14, dadurch gekennzeichnet, dass man als Komponente b eine Monocarbonsäure oder Dicarbonsäure einsetzt, die ausserdem im Molekül 2 oder 3 Hydroxisubstituenten aufweist, beispielsweise Dihydroxipropionsäure, Dihydroxibernsteinsäure, Dihydroxibenzoesäure oder Dimethylolpropionsäure.

16. Verfahren gemäss einem der Ansprüche 10 bis 15, dadurch gekennzeichnet, dass man als Komponente c) ein aliphatisches, cycloaliphatisches oder aromatisches Diisocyanat oder Triisocyanat verwendet, insbesondere ein Isocyanat, welches aus der Gruppe ausgewählt ist, welche die folgenden Isocyanate umfasst:
2,4- und 2,6-Toluoldiisocyanat, 4,4'- und 2,4'-Diphenylmethandiisocyanat, Isophorondiisocyanat, 2,2,4- und 2,4,4-Trimethyl-1,6-hexamethylendiisocyanat, Hexan-1,6-diisocyanat, m- und p-Tetramethyl-xylyl-diisocyanat und die Isomeren des 4,4' oder 2,4-Dicyclohexylmethandiisocyanats sowie Polymere oder Oligomere dieser Isocyanate sowie Mischungen aus zwei oder mehr der angegebenen Isocyanatkomponenten, wobei jedoch in der Isocyanatkomponente kein Ueberschuss an dem trans-transIsomeren des 4,4'-Dicyclohexylmethan-diisocyanates enthalten ist.

17. Verfahren gemäss einem der Ansprüche 10 bis 16, dadurch gekennzeichnet, dass man eine wässrige Kunststoffdispersion herstellt, die zusätzlich zu den dispergierten Kunststoffteilchen noch mindestens einen weiteren Bestandteil enthält, der aus der Gruppe ausgewählt ist, die weitere Kunststoffe, Pigmente, anorganische oder organische Füllstoffe, Fasern, Thixotropiermittel, Verdickungsmittel, Weichmacher, Entschäumer, flammhemmende Zusätze, Frostschutzmittel, Dispergierhilfsmittel, sowie stabilisierende Mittel wie Antioxidantien, Lichtschutzmittel, UV-Absorber, fungistatische Mittel, Bakterizide, und Konservierungsmittel, umfasst.

18. Verwendung von Kunststoffdispersionen gemäss einem der Ansprüche 1 bis 9 zur Herstellung von wasserdichten Verbindungen zwischen Substraten, beispielsweise Festkörpern aus Holz, Kunststoff, Metall, Stein, Kunststeinen wie Ziegel, Beton und Substraten mit Oberflächenbeschichtungen aus organischen Materialien, beispielsweise lackierten Substraten.

19. Verwendung gemäss Anspruch 17, dadurch gekennzeichnet, dass man die wässrige Kunststoffdispersion zur Abdichtung von Fugen einsetzt bzw. zur Herstellung einer dichtenden Verbindung zwischen zwei Formkörpern einsetzt, die sich voneinander in einem Abstand von mindestens 3 mm befinden, wobei die dichtende Verbindung in einem Temperaturbereich von -40°C bis +80°C eine hohe Dehnung, einen tiefen Elastizitätsmodul und ein gutes Rückstellvermögen aufweist, so dass durch die Abdichtung eine räumliche Verschiebung zueinander der miteinander dichtend verbundenen Formkörper in kleinen Bereichen ermöglicht wird, wobei ein Minimum von Kräften von einem Formkörper auf den anderen mit ihm dichtend verbundenen Formkörper übertragen wird.
